Europäisches Patentamt

European Patent Office

Office européen des brevets

Numéro de publication: **0 284 068**

**A1**

## DEMANDE DE BREVET EUROPEEN

Numéro de dépôt: **88104741.9**

Int. Cl.⁴ **B01D 53/04**

Date de dépôt: **24.03.88**

Priorité: **27.03.87 FR 8704337**

Date de publication de la demande:
**28.09.88 Bulletin 88/39**

Etats contractants désignés:
**AT BE CH DE ES FR GB GR IT LI LU NL SE**

Demandeur: **AMEG FRANCE**
**7-9 Rue Cambronne**
**F-75739 Paris Cédex 15(FR)**

Demandeur: **CECA S.A.**
**22, Place des Vosges**
**F-92400 Courbevoie(FR)**

Inventeur: **Fritsch, Georges**
**95, Avenue Gambetta**
**F-75020 Paris(FR)**

Mandataire: **Casalonga, Axel et al**
**BUREAU D.A. CASALONGA - JOSSE**
**Morassistrasse 8**
**D-8000 Munich 5(DE)**

Procédé et equipement de traitement et de récupération de vapeurs de solvants par recyclage sur charbon actif.

Equipement pour le traitement de rejets gazeux chargés de solvants par adsorption sur des fibres de charbon actif (5) disposé dans un ensemble (3), suivie de désorption au moyen d'un fluide gazeux chauffé par un préchauffeur (14) et des éléments de chauffage (6) placés sous les fibres de charbon actif, les vapeurs de solvants étant piégées et liquéfiées dans un condensateur (10) relié à un groupe frigorifique (14); la désorption est suivie d'un balayage d'air frais, l'ensemble (3) assure alternativement l'adsorption et la désorption des vapeurs de solvants.

Cet équipement permet de réaliser un procédé de traitement et de récupération de vapeurs de solvants et plus particulièrement de solvants chlorés et chlorofluorocarbonés, permet de travailler à des températures de régénération inférieures, avec des rendements supérieurs pour le même poids de charbon actif et de récupérer les solvants chlorés sans les déstabiliser.

FIG.4

## Procédé et équipement de traitement et de récupération de vapeurs de solvants par recyclage sur charbon actif.

L'invention a pour objet une installation et un procédé de traitement et de récupération de vapeurs de solvants et plus particulièrement de solvants chlorés par recyclage sur charbon actif en fibres.

Le traitement de l'air provenant de différentes opérations industrielles et contenant des solvants et en particulier des solvants chlorés au moyen de charbon actif, est connu.

Les équipements ou installations utilisés jusqu'ici pour une telle récupération sont lourds et leur mise en oeuvre nécessite une dépense d'énergie importante. Les installations connues utilisent habituellement du charbon actif sous forme de granulés ou filés qui présentent comme inconvénient la formation d'un front d'adsorption qui limite l'efficacité absolue du charbon actif.

Récemment, on a vu apparaître des installations utilisant pour l'adsorption des solvants du charbon actif en fibres, sous forme de feutres, et pour la désorption (libération du solvant) de la vapeur d'eau surchauffée.

L'utilisation de la vapeur d'eau surchauffée pour la désorption nécessite une dépense d'énergie importante et en outre présente de nombreux inconvénients, notamment lorsqu'il s'agit de solvants chlorés ou chlorofluorocarbonés.

En effet, la vapeur d'eau peut donner naissance avec les solvants chlorés à de l'acide chlorhydrique très corrosif; de plus, une fraction de cette vapeur d'eau reste dans la masse du charbon actif; en outre, l'action conjuguée de la vapeur d'eau et de la température élevée élimine en totalité ou en partie de certains solvants chlorés certains de leurs stabilisants, utilisés pour rendre ces solvants chlorés moins agressifs. Ces stabilisants appartiennent à la classe des alcools, des nitroalcanes, des époxydes, des amines, des esters, des antioxydants, des nitrates organiques, des nitrites, etc.

Il existe par conséquent un besoin d'équipement permettant la récupération des solvants et en particulier des solvants chlorés, d'un coût d'exploitation moindre, travaillant à plus basse température, nécessitant une dépense d'énergie moindre et ne déstabilisant pas les solvants chlorés.

L'invention a par conséquent pour objet un équipement pour le traitement de rejets gazeux chargés de solvants et plus particulièrement de solvants chlorés, par adsorption sur charbon actif en fibres - de préférence sous forme de tissu - suivie de désorption en utilisant comme fluide de régénération de l'air chaud ou un fluide neutre tel que l'azote, afin de récupérer lesdits solvants sous forme liquide.

L'équipement selon l'invention comprend (A) un ou plusieurs ensemble(s) ou élément(s) d'adsorption-désorption renfermant le charbon actif en fibres et (B) un système de récupération des solvants comprenant (a) des moyens pour transformer les solvants adsorbés sous forme de vapeurs, (b) des moyens pour condenser les vapeurs de solvants et les vapeurs d'eau pouvant être présentes provenant des rejets gazeux traités, (c) des moyens pour séparer, s'il y a lieu, les condensats de nature différente, et (d) des moyens permettant la circulation des fluides gazeux en circuit fermé à travers l'ensemble (A) et le système (B).

Le charbon actif en fibres utilisé se présente généralement sous forme de couches ou feuilles de fibres tissées ou non tissées que l'on dispose en lit ou matelas contenant généralement de 10 à 30 couches et qui est placé entre deux grillages métalliques maintenus par un cadre métallique formant un cadre-support, un ou plusieurs de ces cadres-supports étant disposé(s) dans un tiroir carré ou rectangulaire dans un même plan formé par un bâti composé de quatre côtés sur lesquels ont été rapportées des cornières supportant les cadres-supports; sous le ou les cadre(s)-support(s) se trouvent des éléments de chauffage et en particulier des résistances électriques amovibles dont les extrémités sont fixées sur un des côtés du bâti du tiroir.

Les tiroirs renfermant les cadres-supports contenant les couches de fibres tissées ou non tissées de charbon actif sont disposés en séries et/ou en parallèle, sur des glissières soudées sur le bâti du caisson d'adsorption-désorption, un déflecteur également soudé sur le caisson étant placé au-dessus et en-dessous de chaque tiroir, un seul déflecteur séparant deux tiroirs contigüs.

Dans un mode de réalisation préféré de l'invention, des tiroirs de forme rectangulaire supportent deux cadres-supports contenant chacun de 10 à 30 couches de tissu de charbon actif, ces tiroirs étant disposés décalés l'un par rapport à l'autre, à la manière d'un escalier, les tiroirs étant séparés par les déflecteurs formant des chicanes, destinées à créer des turbulences dans le fluide en circulation, favorisant les opérations d'adsorption et de désorption.

Les caissons, les tiroirs et les cadres-supports de l'ensemble adsorbeur-désorbeur sont en acier inoxydable pour résister aux solvants chlorés.

L'air ou le fluide gazeux chargé de solvants passe à travers les couches de tissu de charbon actif qui adsorbent les solvants. l'air débarrassé de solvants étant rejeté dans l'atmosphère. Lorsque le charbon actif en fibres est saturé de solvants, l'opération de régénération permet de désorber par élévation de température. les solvants adsorbés et de les entraîner au moyen d'un flux d'air ou de gaz neutre chaud, puis de liquéfier et récupérer ces solvants. tout en les séparant, le cas échéant, de l'eau provenant éventuellement de l'humidité contenue dans le rejet gazeux traité. L'équipement comprend, par conséquent, également, un réchauffeur à bain d'huile placé dans le circuit désorption qui est muni d'un thermostat et qui est chauffé à une température comprise généralement entre 40 et 50°C ainsi que des résistances électriques placées en-dessous des fibres de charbon actif et qui sont commandées par un autre thermostat.

L'équipement comprend également des moyens pour condenser les vapeurs de solvants; ces moyens comprennent, selon un mode de réalisation de l'invention, un groupe frigorifique, une batterie de condensation, un système de goutte-à-goutte et un séparateur.

Selon un autre mode de réalisation, la batterie de condensation et le système de goutte-à-goutte sont remplacés par un système de cryocondensation de solvants dit "FRIGOSOLVER".

Une turbine à ailettes permet de faire circuler l'air en circuit fermé pendant l'opération de désorption. L'équipement comprend également des vannes ou volets d'air permettant de faire passer les fluides en circuit ouvert ou fermé, un détecteur de solvants placé avant le rejet d'air dans l'atmosphère, permettant de détecter la saturation du tissu de charbon actif et permettant de passer du cycle d'adsorption au cycle de désorption lorsque les fibres de charbon actif sont saturées, évitant l'émission de solvant dans l'atmosphère.

L'équipement comprend également un système d'aspiration placé à la sortie de l'adsorbeur de façon que l'ensemble se trouve en légère dépression, évitant les fuites accidentelles du rejet gazeux traité.

L'équipement comprend également des vannes ou volets d'air pneumatiques, coudés, orientables, à double effet, à joints en caoutchouc silicone interchangeables, résistant aux solvants et à haute température, assurant une parfaite étanchéité.

La figure 1 représente une vue de dessus d'un tiroir interchangeable utilisé dans l'adsorbeur;

la figure 2 représente une coupe d'un tiroir avec cadres-supports contenant les feuilles de tissu en charbon actif;

la figure 3 représente une coupe d'un ensemble ou caisson adsorption-désorption;

la figure 4 représente une installation complète d'adsorption-désorption, utilisant pour la condensation des vapeurs de solvant(s), une batterie de condensation;

la figure 5 représente une installation complète d'adsorption-désorption utilisant pour la condensation des vapeurs de solvants un système de récupération dit "FRIGOSOLVER".

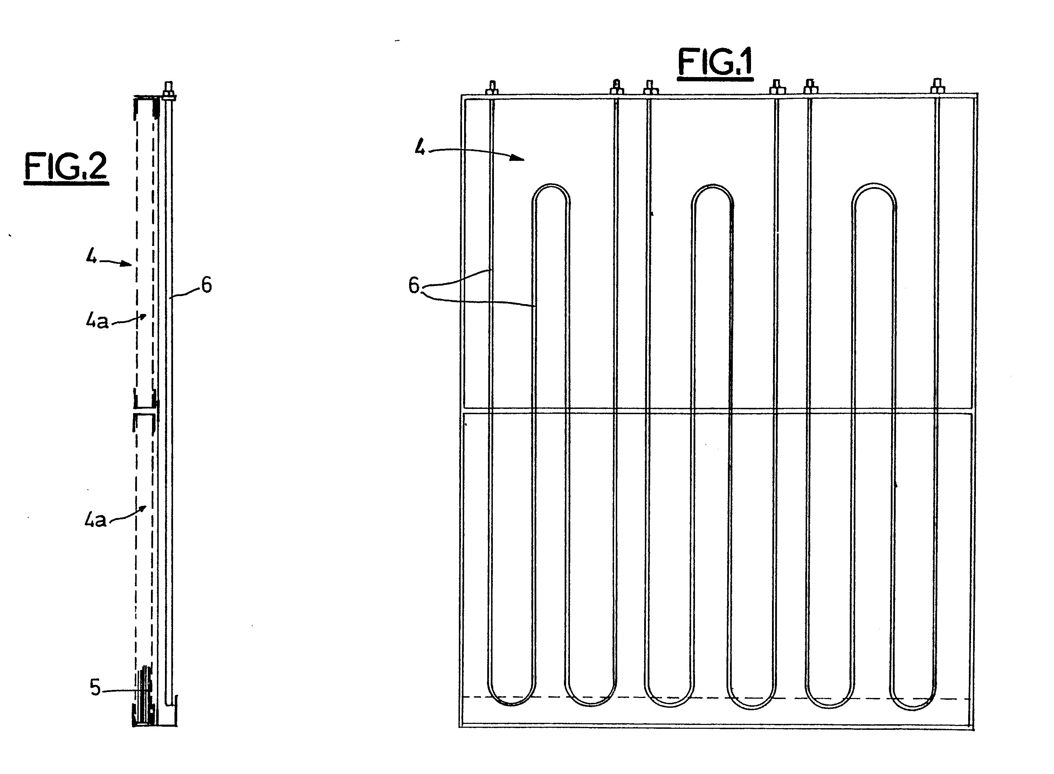

La figure 1 représente un tiroir amovible (4) avec des résistances électriques amovibles (6) dont les extrémités sont fixées sur un des côtés du bâti du tiroir.

La figure 2 représente la vue en coupe d'un tiroir (4) avec deux cadres-supports (4a), contenant le lit de couches de tissu de charbon actif (5); en-dessous du cadre-support, on voit la résistance électrique amovible (6).

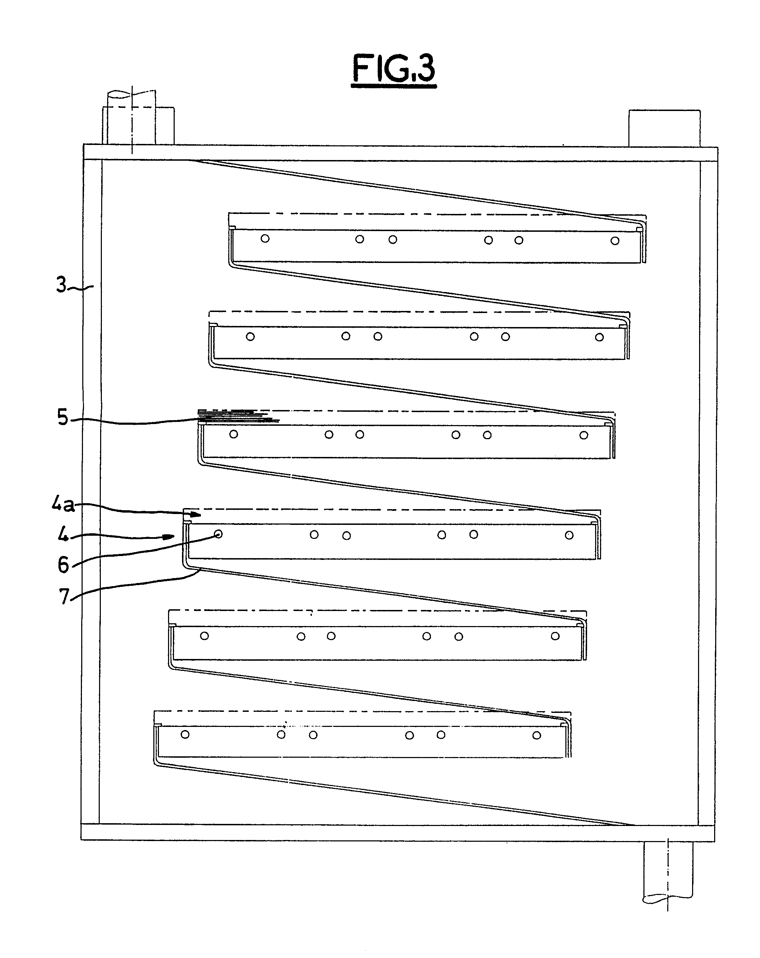

La figure 3 représente l'ensemble adsorbeur-désorbeur contenant six tiroirs amovibles (4) avec les cadres-supports (4a), le lit de couches de tissu de charbon actif (5) et les résistances (6). On voit, sur cette figure, que les tiroirs sont disposés décalés les uns par rapport aux autres et sont séparés par des déflecteurs (7) qui empêchent l'air de passer directement d'un tiroir à l'autre.

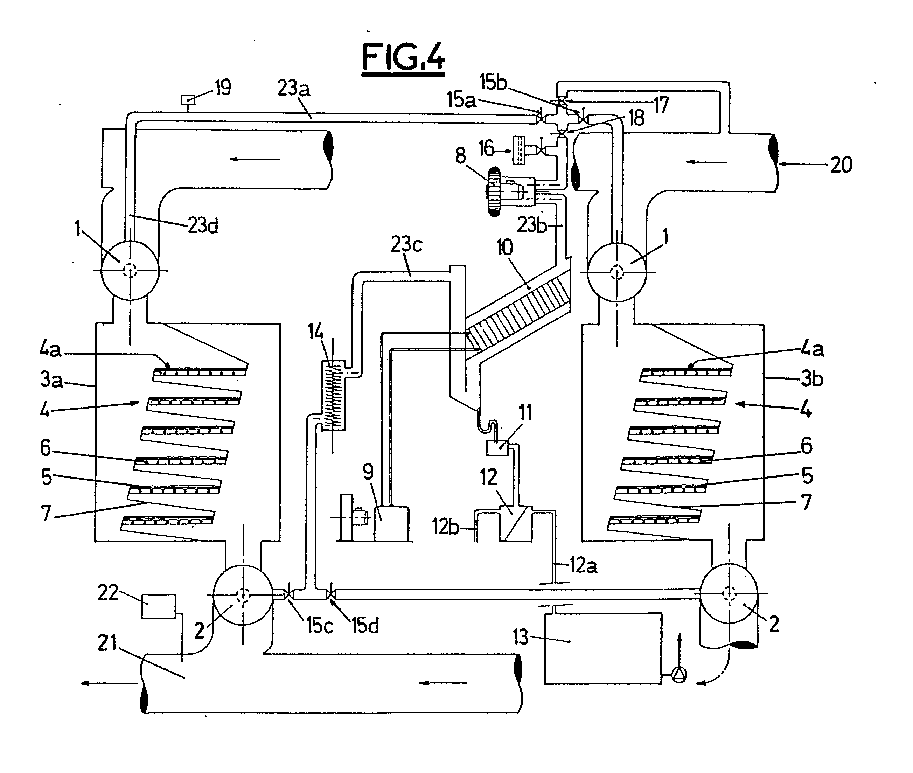

La figure 4 représente un équipement au complet pour l'adsorption et pour la désorption avec liquéfaction des vapeurs de gaz au moyen d'une batterie de condensation (10).

Sur cette figure, on voit deux caissons ou ensembles adsorption-désorption (3a et 3b) contenant sept tiroirs interchangeables (4) avec des couches de tissu de charbon actif (5) disposées dans des cadres-supports (4a) au-dessus des résistances (6), les tiroirs étant séparés par des déflecteurs (7).

L'air chargé de solvants arrive par la gaine (20) et le volet d'air (1) et traverse l'ensemble adsorbeur (3a ou 3b) de haut en bas. L'air épuré ressort par le volet d'air (2) et la gaine d'extraction (21). A la sortie de l'air épuré, se trouve le détecteur de solvants (22) permettant de détecter la saturation du charbon actif. Quand les tissus de charbon actif sont saturés, le détecteur (22) commande l'arrêt de l'adsorption dans ledit ensemble (3a ou 3b) et le début de l'opération de désorption.

La désorption s'effectue au moyen d'air chaud ou d'un gaz neutre chaud tel que l'azote, en circuit fermé. Les volets d'air (1 et 2) de l'adsorbeur-désorbeur en régénération sont fermés, l'air se trouvant dans l'ensemble en adsorption et dans le circuit est mis en rotation par une turbine (8). Cet air est préchauffé par le réchauffeur à bain huile (14) qui porte l'air généralement à une température comprise entre 40 et 50°C; les résistances électriques (6) sont chauffées à une température variant avec la nature du solvant à récupérer de façon à obtenir une température de l'air traversant les couches de tissu suffisante pour désorber le solvant.

En supposant que c'est le caisson (3a) qui est en désorption. l'air préchauffé par le réchauffeur (14) est dirigé vers ledit caisson (3a) par l'intermédiaire de la vanne (15c). traverse de bas en haut les tiroirs chargés de couches de tissu de charbon actif, passe ensuite dans le conduit (23a) puis par les vannes (15a et 18), dans le conduit (23b), arrive dans la batterie de condensation (10) où les vapeurs de solvants sont condensées, tandis que l'humidité éventuellement contenue dans l'air se cristallise sous forme de micro-glaçons sur les condenseurs. Le solvant liquéfié passe dans un dispositif appelé "système de goutte-à-goutte" (11) qui comporte un flotteur, une pastille et un étranglement calibré selon la nature du solvant, le flotteur étant relié par l'intermédiaire d'un contacteur à un relais qui commande la mise hors de circuit du réchauffeur (14) et l'arrêt des résistances électriques (6) lorsque les gouttes de solvants deviennent trop espacées. Du système de goutte-à-goutte (11) le solvant qui entraîne les micro-cristaux de glace arrive dans le séparateur (12) qui sépare le solvant et l'eau provenant de la fusion des micro-cristaux; le solvant passe par le trop-plein (12a) dans une bâche à solvants (13), tandis que l'eau est évacuée par le trop-plein (12b).

La batterie de condensation (10) est alimentée par un groupe frigorifique (9).

Lorsque toute la quantité condensable de solvant(s) a été condensée et récupérée, de l'air frais filtré entre par la vanne d'air (16). Cet air frais suit le parcours de désorption ci-dessus indiqué. Le réchauffeur (14) et les résistances électriques (6) étant arrêtés, les fibres de charbon actif (5) sont refroidies.

Les derniers restes de solvant extrait du charbon actif refroidi, sont dirigés, par l'intermédiaire de la vanne d'air (17) dans la gaine (20) et sont adsorbés par les tissus de charbon actif se trouvant dans le deuxième ensemble (3b) qui est en adsorption.

L'opération de désorption comporte plusieurs cycles de recyclage. Lors du recyclage, l'air ou le gaz inerte chaud, chargé de vapeurs de solvants, passe dans un circuit comprenant les conduits (23a, 23b), la batterie de condensation (10), le conduit (23c), le réchauffeur (14), la vanne (15c), l'ensemble (3a) et le conduit (23d). Un circuit similaire s'établit pour l'adsorption de l'ensemble (3b).

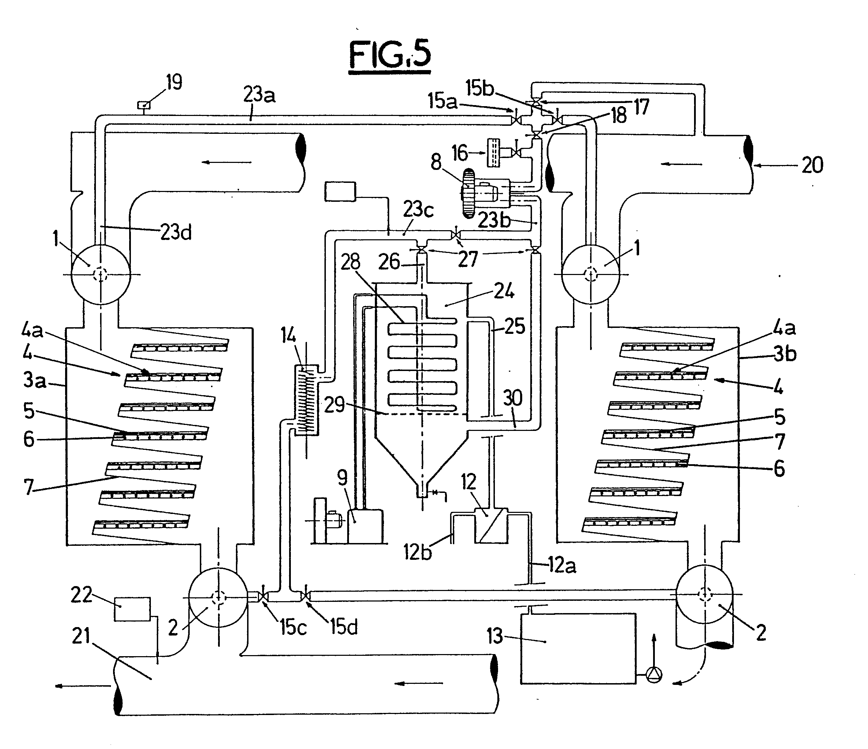

La figure 5 représente le même équipement que la figure 4, avec la différence que la batterie de condensation (10) est remplacée par un dispositif de cryocondensation pour la récupération de solvants, dit "FRIGOSOLVER" (24). Le système "FRIGOSOLVER" comprend un récipient cylindro-conique rempli du solvant de même nature que le solvant à récupérer et qui se trouve à une température de -10 à -15°C. Les bulles d'air contenant le solvant et éventuellement des vapeurs d'eau provenant de l'humidité des rejets gazeux traités arrivent à la partie inférieure de ce récipient par le conduit (30) et sont diffusées dans le solvant réfrigéré au moyen d'un diffuseur (29). Les vapeurs de solvants sont liquéfiées tandis que l'humidité éventuellement présente est cristallisée sous forme de micro-glaçons. Le solvant liquide contenant en suspension les cristaux de glace passe par le trop-plein (25) dans un séparateur (12) qui sépare le solvant qui passe par le trop-plein (12a) dans la bâche à solvant (13), tandis que l'eau provenant de la fonte des micro-cristaux de glace ressort par le trop-plein (12b); l'air froid ressort par la partie supérieure par le conduit (26) et continue son cycle en repassant par le réchauffeur (14).

Lorsqu'il n'y a plus de solvants à liquéfier, le refroidissement du tissu s'effectue en isolant l'ensemble "FRIGOSOLVER" par l'intermédiaire des vannes d'air (27).

Le balayage par l'air frais filtré, entré par la vanne et le filtre (16), entraîne les derniers restes de solvant vers la gaine (20), par l'intermédiaire de la vanne (17) et s'effectue de la même façon que lorsqu'on utilise la batterie de condensation selon la figure (4).

L'équipement selon l'invention présente par rapport aux installations de l'art antérieur les avantages suivants :

-une grande surface d'accès au charbon actif;

-un front d'adsorption pratiquement nul et une cinétique d'adsorption très rapide, qui permettent :

-de diminuer notablement le poids de charbon actif utilisé;

-d'utiliser des cycles d'adsorption-désorption très courts, aboutissant à une réduction d'autant du volume de l'appareil industriel;

-une perte de charge à travers la couche de tissu de charbon actif très faible;

-une possibilité de changer facilement les cadres-supports contenant le lit de couches de tissu de charbon actif;

-un ensemble d'adsorption-désorption léger utilisant par conséquent une quantité réduite d'acier inoxydable;

-un arrangement décalé des tiroirs et la disposition des déflecteurs créant une turbulence qui favorise la répartition et la circulation des flux gazeux en adsorption et désorption;

-lors de la désorption, le chauffage à proximité du lit de tissu de charbon actif, au moyen des résistances électriques, sans être obligé de chauffer à la même température l'ensemble du volume d'air en circulation, permet d'économiser beaucoup d'énergie;

-l'utilisation pour la désorption de l'air chaud ou d'un gaz neutre chaud tel que l'azote à la place de la vapeur d'eau habituellement utilisée, réduit la corrosion et évite la déstabilisation des solvants chlorés;

-la coupure du chauffage par le système de goutte-à-goutte permet de passer automatiquement de la désorption au refroidissement par balayage d'air frais;

-le renvoi à la fin de la désorption des derniers restes de solvant dans le caisson (3) travaillant en adsorption, évite le rejet de ces restes de solvant dans l'atmosphère;

-la présence d'un moto-ventilateur d'aspiration, à la sortie de la gaine (21), de l'air de l'adsorbeur, maintient l'ensemble en légère dépression et évite des fuites éventuelles;

-les tiroirs (4) démontables, les cadres-supports (4a) (contenant des couches de tissu de charbon actif) et les résistances électriques (6) interchangeables, facilitent considérablement les opérations d'entretien;

-la conception des volets d'air pneumatiques munis de joints interchangeables assure une parfaite étanchéité.

L'invention a également pour objet un équipement pour le traitement de rejet gazeux chargé de solvant, par adsorption sur charbon actif en fibres, de préférence sous forme de tissu, suivi d'une désorption, au moyen de fluides de régénération, et d'une récupération des solvants, caractérisé par le fait qu'il comprend (A) un ou plusieurs et de préférence deux ensembles ou caissons d'adsorption-désorption (3) contenant le charbon actif en fibres, de préférence sous forme de tissu et (B) un système de récupération des solvants comprenant :

(a) des moyens pour transformer les solvants adsorbés sous forme de vapeurs;

(b) des moyens pour condenser les vapeurs de solvants et les vapeurs d'eau pouvant être présentes;

(c) des moyens pour séparer, s'il y a lieu, les solvants condensés des cristaux de glace provenant de la vapeur d'eau contenue dans le fluide de régénération;

(d) des moyens permettant la circulation des fluides en circuit fermé à travers l'ensemble (A) et le système (B).

L'ensemble d'adsorption-désorption (3) contient du charbon actif en fibres, de préférence sous forme de lit composé de couches de tissu de charbon actif superposées, disposées entre deux grillages métalliques et maintenues par un cadre métallique, formant un cadre-support (4a), un ou plusieurs de ces cadres-supports étant disposé(s) dans un tiroir carré ou rectangulaire (4) formé par un bâti composé de quatre côtés sur lesquels ont été rapportées des cornières supportant des cadres-supports; sous le ou les cadres(s)-support-

(s), se trouvent des éléments de chauffage, en particulier des résistances électriques amovibles (6) dont les extrémités sont fixées sur un des côtés du bâti.

Les tiroirs renfermant les cadres-supports contenant les couches de tissu de charbon actif sont disposés en séries ou en parallèle, sur des glissières soudées sur le bâti du caisson (3), un déflecteur (7) également soudé sur le caisson étant placé au-dessus et en-dessous de chaque tiroir (4), un seul déflecteur séparant deux tiroirs contigüs.

Ces déflecteurs soudés sur les parois assurent une meilleure résistance des caissons et permettent de réduire l'épaissseur de la tôle en acier inox des caissons, ce qui réduit le coût de l'équipement.

L'ensemble adsorption-désorption (3) comprend plusieurs tiroirs (4), de préférence entre six et dix en série, ces tiroirs démontables étant garnis de cadre(s)-support(s) contenant le lit de tissu de charbon actif, ces tiroirs, étant disposés décalés les uns par rapport aux autres, et des déflecteurs (7), formant des chicanes, créent des turbulences dans le fluide en circulation, favorisant la répartition et la circulation des flux gazeux en adsorption et désorption.

L'équipement comprend comme moyen pour désorber les solvants adsorbés sur le charbon actif :

-un réchauffeur, par exemple à bain d'huile (14);

-des éléments chauffants tels que des résistances chauffantes (6) placées en-dessous des cadres-supports contenant le lit de couches de tissu de charbon actif; et

-un thermostat (19) qui commande les résistances chauffantes ainsi qu'un thermostat qui commande le réchauffeur à bain d'huile (14).

Les moyens pour condenser les vapeurs de solvants comprennent, selon un des modes de réalisation, un groupe frigorifique (9), une batterie de condensation (10), un système de goutte-à-goutte (11) et un séparateur (12).

Selon un autre mode de réalisation, la batterie de condensation (10) et le système de goutte-à-goutte (11) sont remplacés par un dispositif de cryocondensation pour la récupération de solvant, contenant un solvant réfrigéré identique, dit "FRIGOSOLVER" (24).

Selon un mode de réalisation, les moyens pour condenser les vapeurs de solvants comprennent un groupe frigorifique et un dispositif de cryocondensation qui séparent les produits condensables entraînés par le fluide gazeux de régénération. Ces produits sont condensés sous forme liquide pour le solvant et sous forme de cristaux de glace pour l'eau éventuellement contenue dans le solvant. Le dispositif de cryocondensation est constitué, soit par un condenseur à paroi froide, soit par une masse réfrigérée de solvant de même nature que le solvant à condenser et dans lequel barbotte le fluide gazeux de régénération.

L'équipement comporte également une turbine à ailettes (8) et des vannes (15a, 15b, 15c, 15d et 27) permettant de recycler en circuit fermé les fluides gazeux se trouvant dans l'ensemble (3), qui est en désorption, et dans le circuit de recyclage et permettant de les faire passer par les conduits (23) en circuit fermé, ladite turbine (8) supportant des concentrations élevées en vapeur de solvants.

Les vannes ou volets (17) permettent de renvoyer l'air sortant de l'ensemble (3) qui est en désorption et qui contient des vapeurs en quantité résiduelle non condensables dans l'ensemble (3), qui est en adsorption, permettant ainsi d'éviter le rejet dans l'atmosphère des solvants résiduels.

Le détecteur de solvants (22) placé avant le rejet d'air dans l'atmosphère permet de détecter la saturation du tissu de charbon actif et de passer du cycle d'adsorption au cycle de désorption, en évitant l'émission de solvant dans l'atmosphère.

Le système d'aspiration placé à la sortie de l'adsorbeur place l'ensemble en légère dépression, évitant les fuites accidentelles du rejet gazeux traité.

L'invention a également pour objet un procédé de traitement et de récupération de vapeurs de solvant, contenues dans l'air ou dans un autre fluide gazeux, caractérisé par le fait qu'on traite l'air ou le fluide gazeux contenant les vapeurs de solvant, dans un équipement selon l'invention, ce procédé comportant trois stades.

Dans un premier stade d'adsorption, on fait passer, à la température ambiante, l'air ou le fluide gazeux contenant les vapeurs de solvant dans l'adsorbeur (3) contenant des couches de tissu de charbon actif (5) superposées formant un lit, dans un cadre-support (4a) disposé dans un tiroir amovible (4) au-dessus d'éléments de chauffage, en particulier de résistances électriques amovibles (6); les vapeurs de solvant sont adsorbées sur le tissu de charbon actif et on rejette l'air ou le fluide gazeux débarrassé de solvant par un conduit (21) muni d'un ventilateur qui maintient l'ensemble en une légère dépression;

dans un deuxième stade de désorption, on recycle au moyen d'une turbine (8) un fluide gazeux de régénération et de préférence l'air ou un gaz neutre tel que l'azote, en circuit fermé, à travers les couches de tissu de charbon actif (5) imprégnées de solvant, lesdits tissus de charbon actif étant chauffés par des résistances électriques (6) placées en-dessous des couches de tissu de charbon actif, le fluide de régénération étant choisi de préférence parmi l'air et l'azote préchauffé par un réchauffeur à bain d'huile (14); le solvant adsorbé sur le tissu de charbon actif vaporisé par la chaleur, passe par le conduit (23a), les vannes (15a), (18), le conduit (23b), est liquéfié dans la batterie de condensation (10) (refroidi par un groupe frigorifique (9)), le solvant liquide passe ensuite à travers le système de goutte-à-goutte (11) dans le séparateur (12) puis par le trop-plein (12a) dans la bâche à solvant (13); la vapeur d'eau éventuelle contenue dans le fluide de régénération se dépose sous forme de cristaux de glace sur les condenseurs de la batterie de condensation (10), qui sont entraînés par le solvant liquide dans le séparateur (12) qui le sépare du solvant et l'eau liquide sort par le trop-plein (12b); le recyclage étant continué jusqu'à ce que toute la quantité condensable de solvant soit condensée;

la température de régénération du tissu de charbon actif est généralement de 10 à 30°C. et de préférence d'environ 15°C supérieure à la température d'ébullition du solvant à récupérer;

dans un troisième stade de balayage, on arrête le chauffage des résistances (6) et du réchauffeur (14) et on refroidit les tissus de charbon actif (5) par balayage d'air ou d'un gaz neutre frais tel que l'azote qui suit le même parcours que pendant le stade de désorption.

L'invention a également pour objet une variante du procédé de traitement de récupération des vapeurs de solvants, cette variante représentée par la figure 5 est caractérisée par le fait que la batterie de condensation (10) et le système de goutte-à-goutte (11) (représentés par la figure 4) sont remplacés par l'ensemble de système de cryocondensation pour la récupération de solvants dit "FRIGOSOLVER" (24) (représenté sur la figure 5). Dans cette variante, le solvant vaporisé par la chaleur arrive dans le système "FRIGOSOLVER" qui contient du solvant de même nature que celui à récupérer, réfrigéré entre -10 et -15°C au moyen de condenseurs (28) reliés à un groupe frigorifique (9), les vapeurs de solvants arrivant à la partie cylindrique inférieure du système "FRIGOSOLVER" par le conduit (30) sont diffusées dans le solvant réfrigéré, par le diffuseur (29) qui assure une répartition homogène du flux de vapeur de solvant, sont condensées, tandis que l'humidité contenue dans la vapeur est cristallisée sous forme de micro-glaçons qui sont entraînés par le solvant et passent tous deux par le trop-plein (25) dans le séparateur (12) qui sépare le solvant évacué par le conduit (12a), de l'eau évacuée par le conduit (12b), l'air froid ressortant à la partie supérieure du "FRIGOSOLVER" par le conduit (26);

dans un troisième stade de balayage, on arrête le chauffage des résistances (6) et du réchauffeur (14) et on fait circuler de l'air frais ou un gaz neutre frais à travers les tissus de charbon actif, en isolant le système "FRIGOSOLVER" par les vannes d'air (27).

Dans le procédé selon l'invention, le même ensemble (3a) et (3b) contenant le tissu de charbon actif sert alternativement à l'adsorption et à la désorption; de préférence on utilise deux ensembles (3a et 3b) d'adsorption-désorption qui fonctionnent en alternance l'un en adsorption, l'autre en désorption.

Les quantités résiduelles de solvants extraites du charbon actif en fin de stade de désorption, sont envoyées par la vanne d'air (17) dans le conduit (20) et de là dans l'ensemble (3) qui travaille en adsorption et sont adsorbées par le tissu de charbon actif.

La durée du stade de désorption est inférieure à celle d'adsorption. L'opération de désorption dure de préférence entre 4 et 6 minutes, l'opération de balayage à l'air ou à un gaz neutre frais dure environ une minute et un intervalle de 30 à 60 secondes sépare, par mesure de sécurité, le balayage d'un nouveau cycle d'adsorption.

Le procédé selon l'invention permet de récupérer toutes sortes de solvants et s'applique de préférence aux solvants chlorés tels que le chlorure de méthylène, le trichloro-1,1,1 éthane (dit trichloroéthane 111), le trichloro-éthylène, le perchloréthylène, ainsi qu'aux solvants chlorofluorocarbonés.

Parmi les solvants chlorofluorocarbonés, il faut citer plus particulièrement le chlorodifluorométhane, le dichlorodifluorométhane, le trichlorofluorométhane et le trichloro-1,1,1 trifluoro-2,2,2 éthane.

Le tissu de charbon actif utilisé est choisi dans le groupe formé par les tissus tissés, les feutres non tissés et les tricots. On utilise de préférence un tissu de charbon actif formé de fibres tissées.

Les fibres de charbon actif sous forme de tissu sont fabriquées à partir de différents tissus, de préférence à partir de tissus de viscose ou de tissus synthétiques.

Un rouleau de tissu se dévide en continu à l'alimentation du four de carbonisation et d'activation. La carbonisation s'effectue à température moyenne jusqu'à 600°C en vue d'éliminer tous les composés autres que le carbone par combustion. Une activation à température plus élevée et généralement comprise entre 600 et 1000°C a pour but de créer la porosité du charbon actif et de lui conférer des propriétés d'adsorption. Ce procédé de fabrication utilise une gamme de températures, de temps de séjour, ainsi que des produits auxiliaires qui permettent de garder la structure de la fibre et du tissu d'origine. Le tissu de charbon actif obtenu peut ainsi être à nouveau enroulé. Le procédé plus détaillé de fabrication du tissu de charbon actif est décrit dans les brevets britanniques 1.301.101 et 1 310.011.

On utilise avantageusement du tissu de charbon actif produit par la Société CHARCOAL CLOTH LTD. qui produit des bandes de tissu ayant une largeur comprise entre 2,5 cm et 90 cm.

Le tissu de charbon actif utilisé selon l'invention est microporeux, 90% de la porosité sont créés par des pores ayant un diamètre moyen inférieur à 20 Å ($2 \times 10^{-9}$m). L'épaisseur d'une couche de tissu est de 0.5 mm.

Le poids par mètre carré va de 100 à 120 $g/m^2$,

l'indice de benzène (nombre de grammes de benzène absorbés par 100 g de charbon actif) varie de 25 à 50, selon les qualités.

la surface BET en $m^2/g$ varie de 1000 à 1400.

La perte de charge à travers le tissu de charbon actif est très faible et représente 0,1 mm de colonne d'eau par couche de 0,5 mm d'épaisseur pour une vitesse de passage de 1 cm/seconde.

La perte de charge totale est nettement inférieure à celle d'un lit de granulés de charbon actif ayant le même pouvoir d'adsorption.

L'exemple non limitatif ci-après illustre l'invention.

## EXEMPLE

On réalise le traitement de l'air chargé par trichloro-1,1,1 éthane (dit trichloroéthane 111) à 20 $g/m^3$ au moyen de l'équipement représenté sur la figure 4.

La vitesse de passage est réglée à 10 cm/seconde. L'air chargé de solvants passe à travers un lit de charbon actif composé de vingt couches de tissu de charbon actif CHARCOAL CLOTH LTD, qualité FM1/250, ayant un poids de 110 $g/m^2$, un indice de benzène de 32%, une surface BET de 1250 $g/m^2$ et une surface Langmuir de 1450 $m^2/g$.

On arrête l'adsorption lorsque la teneur de trichloroéthane 111 rejeté dans l'air est de 110 ppm. La durée du cycle d'adsorption est de 7 minutes.

On procède à la désorption du trichloroétha-111 par régénération à l'air chaud. La température de l'air à la sortie du préchauffeur à bain d'huile est de 55°C, la puissance des résistances électriques exprimée en watts/m² de surface de tiroir est de 4500 watts/m². La température d'air arrivant sur le tissu de charbon actif est de 140°C et après avoir traversé le lit de tissu de charbon actif, sa température tombe à 80°C. On peut considérer que la température moyenne du lit de tissu de charbon actif est d'environ 120°C.

Le temps de désorption est de 5 minutes et le taux d'adsorption est de 25%.

## Revendications

1. Equipement pour le traitement de rejets gazeux chargés de solvants, par adsorption sur charbon actif en fibres suivie de désorption au moyen d'un fluide gazeux de régénération; caractérisé par le fait qu'il comprend :

(A) un ou plusieurs ensembles ou caissons d'adsorption-désorption (3) contenant le charbon actif en fibres;

(B) un système de récupération des solvants comprenant :

(a) des moyens pour transformer les solvants adsorbés sous forme de vapeur;

(b) des moyens pour condenser les vapeurs de solvants et les vapeurs d'eau pouvant être présentes;

(c) des moyens pour séparer, s'il y a lieu, les solvants condensés de l'eau provenant de la vapeur d'eau contenue dans le rejet gazeux à traiter;

(d) des moyens permettant la circulation des fluides en circuit fermé à travers l'ensemble (A) et le système (B).

2. Equipement selon la revendication 1, caractérisé par le fait que l'ensemble (3) d'adsorption-désorption contient du charbon actif en fibres sous forme de lit (5) formé de couches de fibres de charbon actif superposées, le lit étant disposé entre deux grillages métalliques maintenus par un cadre métallique, formant un cadre-support (4a) contenant les fibres de charbon actif, un ou plusieurs de ces cadre(s)-support(s) étant disposé(s) dans un tiroir carré ou rectangulaire (4) formé par un bâti composé de quatre côtés sur lesquels ont été rapportées des cornières supportant les cadres-supports, lesdits cadres-supports étant munis d'éléments de chauffage, en particulier de résistances électriques amovibles (6) dont les extrémités sont fixées sur un des côtés du bâti.

3. Equipement selon la revendication 2, caractérisé par le fait que les tiroirs renfermant les cadres-supports contenant les couches de fibres de charbon actif sont disposés en séries ou en parallèle, sur des glissières soudées sur le bâti du caisson d'adsorption-désorption, un déflecteur (7) également soudé sur le caisson étant placé au-dessus et en-dessous de chaque tiroir (4), un seul déflecteur séparant deux tiroirs contigus.

4. Equipement selon la revendication 2 ou 3, caractérisé par le fait que l'ensemble ou caisson adsorption-désorption (3) comprend plusieurs tiroirs (4) démontables garnis d'un lit (5) de fibres de charbon actif, ces tiroirs étant disposés décalés les uns par rapport aux autres, à la manière d'un escalier et les tiroirs étant séparés par des déflecteurs (7) formant des chicanes, destinés à créer des turbulences dans le fluide en circulation, favorisant la répartition et la circulation des fluides en adsorption et désorption.

5. Equipement selon l'une quelconque des revendications 1 à 4, caractérisé par le fait que les moyens pour transformer les solvants adsorbés sous forme de vapeur comprennent :

-un réchauffeur du fluide de régénération (14);

-des éléments chauffants (6) placés en-dessous des cadres-supports contenant le lit de couches de fibres de charbon actif; et

-un thermostat (19) qui commande les éléments chauffants et un thermostat qui commande le réchauffeur pour le fluide de régénération (14).

6. Equipement selon l'une quelconque des revendications 1 à 5, caractérisé par le fait que les moyens pour condenser les vapeurs de solvant comprennent un groupe frigorifique (9) et un dispositif de cryocondensation qui séparent les produits condensables entraînés par le fluide gazeux de régénération, ces produits étant condensés sous forme liquide pour le solvant et sous forme de cristaux de glace pour l'eau éventuellement contenue dans le solvant, le dispositif de cryocondensation étant constitué, soit par un condenseur à paroi froide, soit par une masse réfrigérée de solvant de même nature que le solvant à condenser et dans lequel barbotte le fluide gazeux de régénération.

7. Procédé de traitement et de récupération de vapeurs de solvant contenues dans l'air ou dans un autre fluide gazeux, caractérisé par le fait qu'on traite l'air ou le fluide gazeux contenant les vapeurs de solvant, dans un équipement selon l'une quelconque des revendications 1 à 6, que ce traitement comporte trois stades :

-dans un premier stade d'adsorption, on fait passer, à la température ambiante, l'air ou le fluide gazeux contenant les vapeurs de solvant dans l'adsorbeur (3) contenant des couches de fibres de charbon actif (5) superposées formant un lit, dans un cadre-support (4a) disposé dans un tiroir amovible (4) au-dessus d'éléments de chauffage, en particulier de résistances électriques amovibles (6); qu'on adsorbe les vapeurs de solvant sur fibres de charbon actif et qu'on rejette l'air ou le fluide gazeux débarrassé de solvant, et

-que dans un deuxième stade de désorption, on recycle au moyen d'une turbine (8) un fluide gazeux de régénération et de préférence l'air ou un gaz neutre tel que l'azote, en circuit fermé, à travers les couches de fibres de charbon actif (5) imprégnées de solvant, lesdites fibres de charbon actif étant chauffées par des éléments chauffants (6) placés en-dessous des couches de tissu de charbon actif, le fluide de régénération étant réchauffé par un réchauffeur (14), le solvant adsorbé sur les fibres de charbon actif est vaporisé par la chaleur. puis liquéfié dans le dispositif de cryocondensation refroidi par un groupe frigorifique (9), où la vapeur d'eau éventuellement contenue dans le fluide de régénération se sépare sous forme de cristaux de glace.

8. Procédé selon la revendication 7, caractérisé par le fait qu'on utilise l'air comme fluide gazeux de régénération.

9. Procédé selon la revendication 7, caractérisé par le fait qu'on utilise l'azote comme fluide gazeux de régénération.

10. Procédé selon l'une quelconque des revendications 7 à 9. caractérisé par le fait que la température du lit de fibres de charbon actif lors de la désorption est généralement de 10 à 30°C. et de préférence d'environ 15°C. supérieure à la température d'ébullition du solvant à recupérer.

11. Procédé selon l'une quelconque des revendications 7 à 10. caractérisé par le fait qu'on récupère (i) un solvant chloré choisi dans le groupe formé par le chlorure de méthylène, le trichloroéthane, le trichloréthylène, le perchloréthylène ou (ii) un solvant chlorofluorocarboné.

12. Procédé selon l'une quelconque des revendications 7 à 11, caractérisé par le fait qu'on utilise des fibres de charbon actif ayant un indice de benzène (nombre de grammes de benzène adsorbé par 100 g de fibres de charbon actif) compris entre 25 et 50, une surface BET en $m^2/g$ comprise entre environ 1000 et 1400.

FIG.2

FIG.1

0 284 068

# FIG.3

FIG.4

# FIG.5

0 284 068

Office européen
des brevets

RAPPORT DE RECHERCHE EUROPEENNE

Numero de la demande

EP 88 10 4741

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 018 478 (SIEMENS AG) <br> * Page 5, ligne 16 - page 9, ligne 13; revendications 1-5; figures * | 1,5,6,7 | B 01 D 53/04 |
| A | CHEMICAL ENGINEERING, vol. 88, no. 17, 24 août 1981, pages 63-65, New York, US; "Activated-carbon fiber aids in solvent recovery" | 1,5,6,7 | |
| A | EP-A-0 189 041 (HOECHST AG) <br> * Page 3, ligne 25 - page 4, ligne 13; figures * | 1,5,6,7 | |
| A | GB-A-1 459 784 (CROFTSHAW (ENGINEERS) LTD) <br> * En entier * | 2,3,4,7 | |
| A | DE-A-2 553 863 (DRÄGERWERK AG) <br> * Pages 5,6; figure 2 * | 2,7 | |

DOMAINES TECHNIQUES RECHERCHES (Int. Cl.4)

B 01 D 53/00
D 06 F 43/00
C 01 B 31/00
B 01 D  5/00

Le présent rapport a été établi pour toutes les revendications

| Lieu de la recherche | Date d'achèvement de la recherche | Examinateur |
|---|---|---|
| LA HAYE | 11-06-1988 | POLESAK, H.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)